# FASCICULE DE BREVET EUROPEEN

(11) **EP 2 812 151 B1**
(45) Date de publication et mention de la délivrance du brevet: **01.08.2018**
(21) Numéro de dépôt: 13712828.6
(22) Date de dépôt: 04.02.2013
(51) Int. Cl.: B23Q 11/00, B23P 19/06, B23Q 1/62

(54) **SYSTEME DE COMPENSATION D'UN EFFORT DE REACTION PRODUIT PAR UN OUTIL MOBILE**
SYSTEM ZUM AUSGLEICHEN DER VON EINEM MOBILEN WERKZEUG PRODUZIERTEN REAKTIONSKRAFT
SYSTEM FOR COMPENSATING FOR A REACTION FORCE PRODUCED BY A MOBILE TOOL

(30) Priorité: 06.02.2012 FR 1200334
(43) Date de publication de la demande: 17.12.2014
(73) Titulaire: ASBE Engineering, 78730 Plaisir (FR)
(72) Inventeur: SIENA, Antonio, F-78370 Plaisir (FR)
(74) Mandataire: Célanie, Christian
(86) Numéro de dépôt international: PCT/FR2013/000036
(87) Numéro de publication internationale: WO 2013/117832

(56) Documents cités:
- EP-A2- 0 009 814
- EP-A2- 0 305 767
- DE-A1- 19 810 333
- DE-U1- 9 402 241
- DE-U1- 20 203 183

## Description

Le secteur technique de la présente invention est celui de la mise en oeuvre des machines comprenant des outils mobiles tels que des outils rotatifs transmettant un couple moteur. Le domaine de l'invention se rapporte notamment aux machines automatisées ou manuelles.

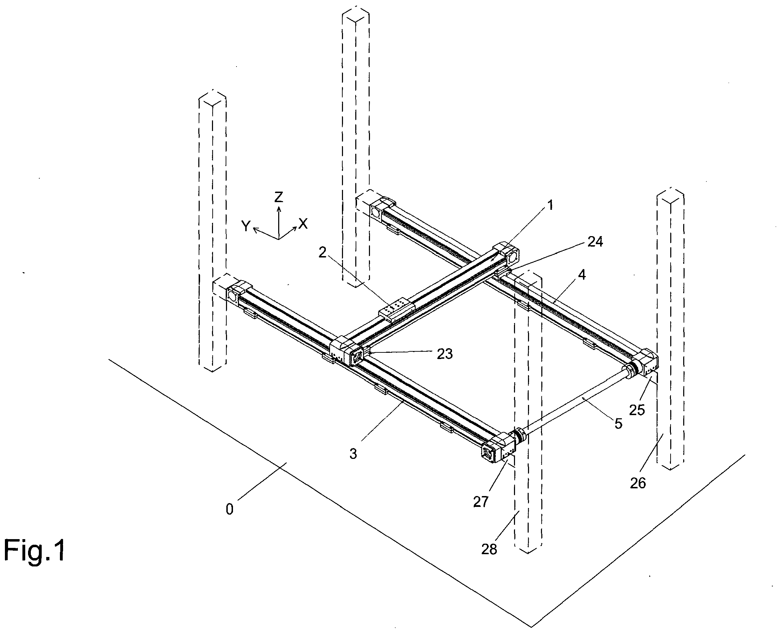

Le document DE9402241 concerne un système de guidage visant à amortir intégralement le couple de réaction exercé par l'outil sur le système de guidage. Dans ce document un chariot est mobile le long d'une barre de support. Cette barre de support est reliée à ses deux extrémités à des supports en U glissant le long des rails. L-'outil-est porté par le chariot et commandé par une manette. La manette commande également les freins du chariot et des supports en U. Ainsi l'arrêt du système de guidage est commandé en même temps que l'activation de l'outil. Dans ce secteur d'activité, il est connu de fixer des outils de faible puissance sur des unités de guidage. Comme représenté à la figure 1, deux unités de guidage en translation sont par exemple combinées entre elles pour couvrir une aire déterminée de travail. Une visseuse est par exemple amenée automatiquement en une ou plusieurs positions pour y réaliser des opérations de vissage. Ces unités de guidage sont limitées à des outils de faible puissance, comme par exemple une visseuse développant un couple d'environ 10N.m. Un outil de puissance moyenne, par exemple une visseuse développant un couple de quelques dizaines de N.m, impose en effet un surdimensionnement important des unités de guidage. Les unités de guidage comprennent par exemple un moteur de commande en déplacement d'une courroie qui entraîne un patin roulant. Les roulements à billes ou à rouleaux des paliers nécessaires pour le roulement, ainsi que le moteur et la courroie sont alors surdimensionnés pour supporter l'effort de réaction produit par cet outil de moyenne puissance.

Pour un outil de puissance importante, comme par exemple une visseuse développant un couple de plus de 50N.m, il est connu de monter cet outil sur un bras télescopique.

Un outil relié à la fois à des unités de guidage telles que représentées à la figure 1 et à un bras télescopique ne permet pas cependant d'exploiter toutes les positions de travail, du fait de l'encombrement du bras télescopique. Un inconvénient est ainsi une couverture partielle de la zone de travail. En outre, l'utilisation d'un tel bras peut éventuellement ne pas supprimer totalement la transmission de l'effort de réaction produit par l'outil, aux organes des unités de guidage, ce qui entraîne la détérioration des unités de guidage.

Le but de la présente invention est de fournir un système de compensation d'un effort de réaction produit par un outil mobile palliant les inconvénients de l'art antérieur et notamment la couverture partielle de la zone de travail par l'outil ou le surdimensionnement des unités de guidage.

L'invention a donc pour objet un système de compensation d'un effort de réaction produit par un outil solidaire de son support mobile selon au moins une direction longitudinale et une direction transversale, caractérisé en ce qu'il comprend des organes de transfert assurant la transmission dudit effort de réaction au corps d'une unité de guidage transversal du support et au corps d'une unité de guidage longitudinale du support.

On voit ainsi que l'invention définit un système de reprise d'effort sur un outil de rotation ou de translation ou de rotations combinées à des translations, pour éliminer au maximum, voire complètement, l'effort de réaction transmis aux organes les moins résistants de ses unités de guidage.

Selon une caractéristique de l'invention, l'outil est du type outil rotatif transmettant un couple moteur.

Selon une autre caractéristique de l'invention, le corps de l'unité de guidage transversal est mobile par rapport au corps de l'unité de guidage longitudinale pour assurer un positionnement longitudinal de l'outil, le support étant mobile par rapport au corps de l'unité de guidage transversal pour assurer un positionnement transversal de l'outil.

Selon une autre caractéristique de l'invention, les unités de guidage transversal et longitudinal assurent le positionnement de l'outil et sont dimensionnées en fonction du poids de l'outil.

Selon une autre caractéristique de l'invention, les organes de transfert comprennent au moins un premier organe de transfert dudit effort de réaction du support vers le corps de l'unité de guidage transversal et au moins un deuxième organe de transfert dudit effort de réaction du corps de l'unité de guidage transversal vers le corps de l'unité de guidage longitudinal.

Selon une autre caractéristique de l'invention, les organes de transfert comprennent au moins une première pince comprenant une première mâchoire dont les mors sont disposés de part et d'autre d'une première glissière fixée au corps de l'unité de guidage transversal et au moins une deuxième pince comprenant une deuxième mâchoire dont les mors sont disposés de part et d'autre d'une deuxième glissière fixée au corps de l'unité de guidage longitudinal.

Selon une autre caractéristique de l'invention, la dite première pince est solidaire du support, ladite deuxième pince étant solidaire du corps de l'unité de guidage transversal.

Selon une autre caractéristique de l'invention, les organes de transfert comprennent deux premières pinces disposées de part et d'autre du support de l'outil.

Selon une autre caractéristique de l'invention, les organes de transfert comprennent deux deuxièmes pinces disposées aux deux extrémités du corps de l'unité de guidage transversal coopérant avec deux deuxièmes glissières.

Selon une autre caractéristique de l'invention, ladite première ou respectivement deuxième glissière se présente sous la forme d'une barre munie d'ergots pour sa fixation au corps de l'unité de guidage transversal ou respectivement longitudinal.

Selon une autre caractéristique de l'invention, ladite première ou respectivement deuxième glissière est fixée au corps de l'unité de guidage transversal ou respectivement longitudinal par des plots d'écartement.

Selon une autre caractéristique de l'invention, l'effort de réaction est également transmis, par les organes de transfert, au corps d'une unité de guidage en profondeur réalisant un positionnement du support de l'outil mobile selon trois directions.

Un autre objet de l'invention concerne un dispositif de positionnement d'un outil comprenant un système de compensation selon l'invention.

Un tout premier avantage de l'invention réside dans le fait que le système de compensation de l'effort de réaction peut être adapté sur des unités de guidage existantes.

Un autre avantage de l'invention réside dans le fait que le système de compensation d'effort assure une rigidification entre eux des corps des unités de guidage qui empêche la transmission de l'effort de réaction aux organes les plus fragiles des unités de guidage.

Un autre avantage de l'invention réside dans la conservation totale des amplitudes des mouvements de l'outil.

Un autre avantage de l'invention réside dans le dimensionnement des unités de guidage en fonction des masses embarquées et des vitesses de positionnement. L'effort de réaction produit par l'outil n'entre en effet plus en ligne de compte dans le dimensionnement des unités de guidage. Les dimensions réduites des unités de guidage permettent ainsi de réduire le coût de ces unités de guidage.

Un autre avantage de l'invention réside dans l'interchangeabilité et la maintenance facilitée, du fait d'une utilisation de nombreuses pièces standard.

Un autre avantage de l'invention réside dans l'encombrement réduit du système de compensation d'effort.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 représente une vue en perspective d'un ensemble connu comprenant des unités de guidage transversal et longitudinal (guidage XY) pouvant être combinées à des unités de guidage selon une troisième dimension (guidage Z),
- la figure 2 est une vue de face d'un système de compensation selon l'invention monté sur des unités de guidage transversal et longitudinal,
- les figures 3 et 4 représentent chacune une vue détaillée en perspective montrant le montage des organes de transfert de l'effort de réaction,
- la figure 5 illustre une glissière destinée à coopérer avec une pince.

L'invention va à présent être décrite avec davantage de détails. La figure 1 représente un ensemble connu comprenant une unité de guidage transversal combinée à deux unités de guidage longitudinal. Les corps 3 et 4 des unités de guidage longitudinal sont reliés entre eux par un arbre de transmission 5. Des chariots 23 et 24 sont mobiles en translation par rapport aux corps 3 et 4 des unités de guidage longitudinal. Ces chariots 23 et 24 sont fixés au corps 1 de l'unité de guidage transversal. Un chariot 2 est mobile en translation par rapport au corps 1 de l'unité de guidage transversal. Les unités de guidage longitudinal sont synchronisées.

Chaque unité de guidage commande un déplacement linéaire du chariot. Un chariot comprend par exemple des paliers de roulement lui permettant de glisser par rapport au corps de son unité de guidage. Ce chariot est entraîné de façon connue par une courroie mise en mouvement par un moteur de commande.

Le chariot 2 de l'unité de guidage transversal est par exemple destiné à être relié à une visseuse.

On réalise ainsi un réglage en abscisse X et en ordonnée Y mais on peut appliquer l'invention à un ensemble mobile également en profondeur, selon un troisième axe Z. Des unités de guidage en profondeur 28 et 26 et leur chariot mobiles 25 et 27 ont ainsi été représentées en traits pointillés. Ces unités de guidage en profondeur sont synchronisées.

Le système de compensation d'effort peut s'appliquer à un ensemble de positionnement à deux dimensions où les unités de guidage longitudinal 3 et 4 sont reliées au bâti 0.

Le système de compensation d'effort peut s'appliquer à un ensemble de positionnement à trois dimensions où les unités de guidage longitudinal 3 et 4 sont reliées à des unités de guidage en profondeur 26 et 28, elles-mêmes reliées au bâti 0.

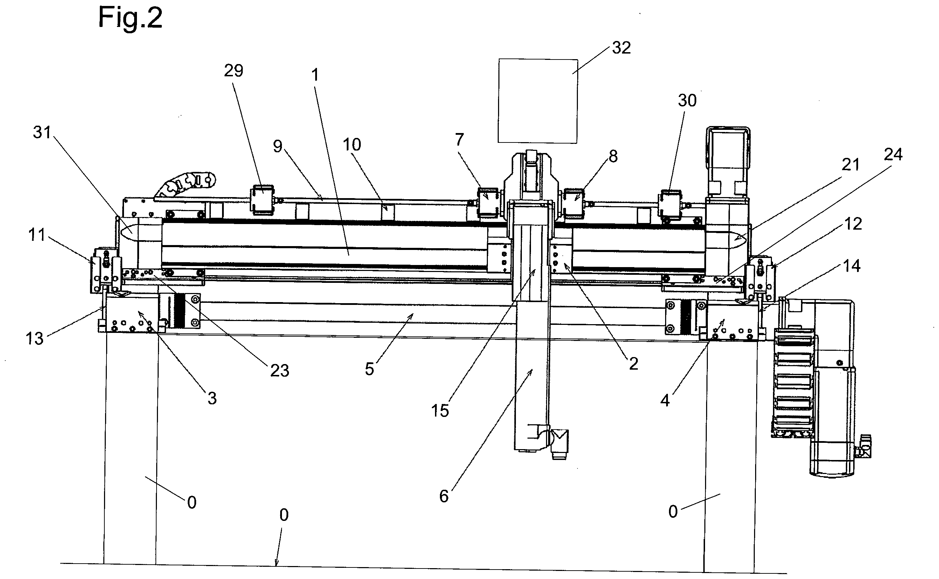

La figure 2 représente un système de compensation pour un dispositif de positionnement à deux dimensions. Une glissière 9 est fixée par des plots 10 sur le corps 1 de l'unité de guidage transversal. La glissière 9 est une pièce en métal, dont la tranche est apparente sur la figure 2. Les plots 10 sont par exemple réalisés sous la forme de cylindres métalliques.

L'outil 6 est fixé à un support 15 monté sur le chariot 2 de l'unité de guidage transversal. Des pinces 7 et 8 sont fixées au support 15 de l'outil 6.

Le chariot 2 étant mobile par rapport au corps de l'unité de guidage transversal, on a représenté en 29 la position de la pince 7 de gauche lorsque le chariot est dans sa position la plus à gauche et on a représenté en 30 la position de la pince 8 de droite lorsque le chariot est dans sa position la plus à droite. La glissière 9 s'étend sur toute la zone de débattement des pinces 7 et 8.

Aux extrémités 21 et 31 du corps 1 de l'unité de guidage transversal, sont fixées des pinces 11 et 12. Des glissières en métal 13 et 14 sont disposées également tout le long des zones de débattement de ces pinces 11 et 12. La glissière 14 est fixée au corps 4 de l'unité de guidage longitudinal. La glissière 13 est fixée au corps 3 de l'unité de guidage longitudinal.

L'arbre de transmission 5 apparaît en arrière-plan. Les corps 3 et 4 des unités de guidage longitudinal sont fixés à un même bâti 0 fixe pour un déplacement en abscisse et en ordonnée de l'outil 6.

Après le positionnement de l'outil 6, dans sa position de travail, les quatre pinces 7, 8, 11 et 12 précédemment décrites sont actionnées et serrent chacune une glissière 9, 13 ou 14. L'outil 6 est alors actionné et l'effort de réaction produit par celui-ci est directement transmis au corps 1 de l'unité de guidage transversal fixé aux corps 3 et 4 de l'unité de guidage longitudinal eux-mêmes fixés au bâti 0. On comprend que l'outil 6 agit sur une pièce 32 elle-même fixée au bâti 0.

Ainsi les organes les moins résistants des unités de guidage, notamment les paliers, les courroies ou les moteurs, ne sont pas sollicités.

Les pinces sont par exemple commandées automatiquement ou semi-automatiquement au moyen de l'énergie hydraulique, pneumatique ou électrique. Les pinces peuvent aussi être activées manuellement.

L'outil est par exemple commandé automatiquement ou semi-automatiquement au moyen de l'énergie hydraulique, pneumatique ou électrique. L'outil est par exemple une visseuse électrique. L'outil peut aussi être activé manuellement.

Les pinces 7 ou 8 coopèrent avec la glissière 9 solidaire du corps 1 de l'unité de guidage transversal en serrant cette glissière 9 lorsque l'outil est activé et en s'écartant de cette glissière 9 lors du déplacement du chariot 2 de l'unité de guidage transversal. Ces deux pinces 7 et 8 peuvent être réalisées de façon identique. Les deux pinces 7 et 8 disposées de part et d'autre de l'outil 6, permettent une bonne répartition des efforts dans la structure rigidifiée des corps des unités de guidage et du bâti.

La pince 11 coopère avec la glissière 13 solidaire du corps 3 de l'unité de guidage longitudinal en serrant cette glissière 13 lorsque l'outil est activé et en s'écartant de cette glissière 13 lors du déplacement du chariot 23 de l'unité de guidage transversal.

La pince 12 coopère avec la glissière 14 solidaire du corps 4 de l'unité de guidage longitudinal en serrant cette glissière 14 lorsque l'outil est activé et en s'écartant de cette glissière 14 lors du déplacement du chariot 24 de l'unité de guidage transversal.

Les pinces 11 et 12 disposées aux deux extrémités 21 et 31 du corps 1 de l'unité de guidage transversal permettent une bonne répartition des efforts dans la structure rigidifiée comprenant les corps des unités de guidage et le bâti. Ces deux pinces 11 et 12 peuvent être réalisées de façon identique.

Avantageusement on peut utiliser des pinces existantes dans le commerce et il n'est pas nécessaire de décrire ces pinces en détail.

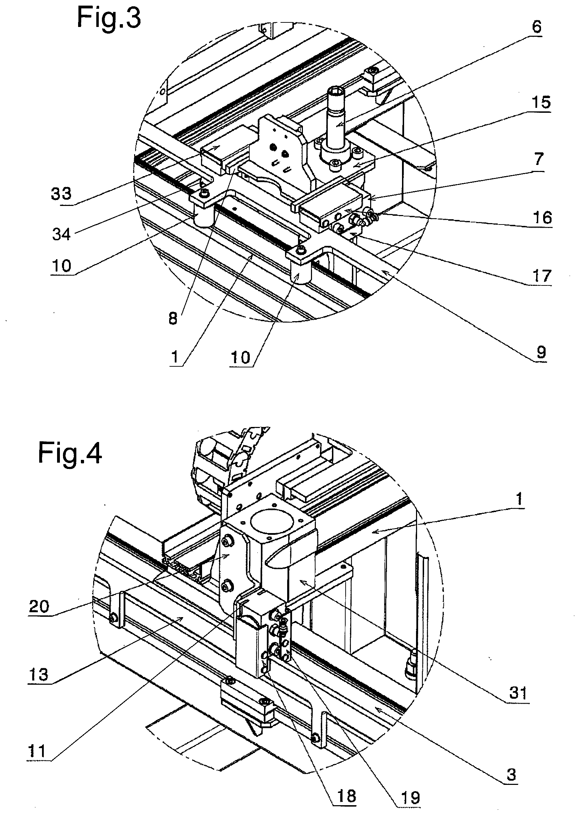

Sur la figure 3, on a représenté une vue partielle montrant un organe de transfert entre le support 15 et le corps 1 de l'unité de guidage transversal. Les pinces 7 et 8 sont solidaires du support 15 de l'outil 6 et sont destinées à coopérer avec la glissière 9. La glissière 9 est fixée au corps 1 de l'unité de guidage transversale et disposée à distance de celui-ci au moyen des plots 10. La pince 7 comporte une mâchoire comprenant deux mors 16 et 17 disposés de part et d'autre de la glissière 9. Les mors 16 et 17 peuvent être à distance de la glissière 9 notamment lors des déplacements du chariot. Les mors 16 et 17 peuvent serrer la glissière 9 notamment lors de l'activation de l'outil 6. Le support 15 de l'outil 6 est fixé à la pince 7, les mors 16 et 17 de la pince 7 étant mobiles par rapport à ce support 15.

De même la pince 8 comporte une mâchoire comprenant deux mors 33 et 34 disposés de part et d'autre de la glissière 9. Les mors 33 et 34 peuvent être à distance de la glissière 9 notamment lors des déplacements du chariot. Les mors 33 et 34 peuvent serrer la glissière 9 notamment lors de l'activation de l'outil 6. Le support 15 de l'outil 6 est fixé à la pince 8, les mors 33 et 34 de la pince étant mobiles par rapport à ce support 15.

Sur la figure 4, on a représenté une vue partielle de la pince 11 fixée à une extrémité du corps 1 de l'unité de guidage transversal. Un tel organe de transfert est fixé à chaque extrémité du corps 1 de l'unité de guidage transversal. Un tel organe de transfert peut aussi être fixé à chaque extrémité des corps 3 et 4 des unités de guidage longitudinal, dans une structure de positionnement à trois axes.

La pince 11 est fixée à l'extrémité du corps 1 par une équerre 20. Cette équerre est réalisée en métal. La pince 11 comprend une mâchoire comprenant deux mors 18 et 19 disposés de part et d'autre de la glissière 13. La glissière 13 est fixée contre le corps 3 de l'unité de guidage longitudinal. Les mors 18 et 19 peuvent être à distance de la glissière 13 notamment lors des déplacements du chariot. Les mors 18 et 19 peuvent serrer la glissière 13 notamment lors de l'activation de l'outil 6. L'extrémité du corps de l'unité de guidage est fixée à la pince 11, les mors 18 et 19 de la pince 11 étant mobiles par rapport à cette extrémité.

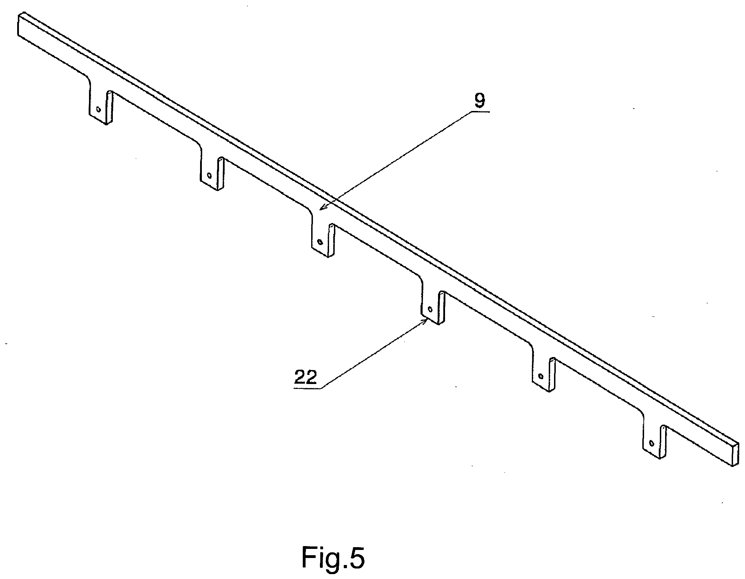

Sur la figure 5, on a représenté un exemple de réalisation de la glissière 9. Le même type de glissière peut être utilisé pour tous les organes de transfert. La glissière se présente sous la forme d'une barre munie d'ergots 22 pour sa fixation au corps d'une unité de guidage. La glissière peut être fixée contre le corps ou à distance du corps au moyen de plots.

Dans la description précédente, on a évoqué une direction transversale, longitudinale ou en profondeur. Il va de soi que ces directions ne sont pas limitatives. Le positionnement de l'outil 6 peut être réalisé dans un espace à trois dimensions ou dans un plan vertical horizontal ou incliné. On peut combiner les guidages linéaires entre eux. Les guidages linéaires peuvent être perpendiculaires les uns aux autres. Les guidages linéaires peuvent ne pas être perpendiculaires les uns aux autres.

Il doit être évident pour l'homme du métier que la présente invention permet d'autres variantes de réalisation. Par conséquent, les présents modes de réalisation doivent être considérés comme illustrant l'invention définie par les revendications jointes.

## Revendications

1. Système de compensation d'un effort de réaction produit par un outil (6) solidaire de son support (15) mobile selon au moins une direction longitudinale et une direction transversale, **caractérisé en ce qu'**il comprend d'une part deux premières pinces (7, 8) disposées de part et d'autre du support (15) de l'outil (6), chaque première pince (7, 8) comprenant une première mâchoire dont les mors (16, 17, 33, 34) sont disposés de part et d'autre d'une première glissière (9) fixée au corps (1) d'une unité de guidage transversal et d'autre part au moins une deuxième pince (11, 12) comprenant une deuxième mâchoire dont les mors (18, 19) sont disposés de part et d'autre d'une deuxième glissière (13) fixée au corps (3, 4) d'une unité de guidage longitudinal pour constituer des organes de transfert (7, 8, 9, 11, 12, 13, 14) assurant la transmission dudit effort de réaction produit par l'outil (6) de type rotatif transmettant un couple moteur, cet effort de réaction étant ainsi transmis au corps (1) de l'unité de guidage transversal et au corps (3, 4) de l'unité de guidage longitudinale.

2. Système de compensation selon la revendication 1, **caractérisé en ce que** les organes de transfert comprennent deux deuxièmes pinces (11, 12) disposées aux deux extrémités (21, 31) du corps (3, 4) de l'unité de guidage transversal coopérant avec deux deuxièmes glissières (13, 14).

3. Système de compensation selon la revendication 1 ou 2, **caractérisé en ce que** le corps (1) de l'unité de guidage transversal est mobile par rapport au corps (3, 4) de l'unité de guidage longitudinale pour assurer un positionnement longitudinal de l'outil, le support (15) étant mobile par rapport au corps (1) de l'unité de guidage transversal pour assurer un positionnement transversal de l'outil (6).

4. Système de compensation selon l'une des revendications 1 à 3, **caractérisé en ce que** les unités de guidage transversal et longitudinal assurent le positionnement de l'outil (6) et sont dimensionnées en fonction du poids de l'outil (6).

5. Système de compensation selon l'une des revendications 1 à 4, **caractérisé en ce que** les organes de transfert comprennent au moins un premier organe de transfert dudit effort de réaction du support (15) vers le corps (1) de l'unité de guidage transversal et au moins un deuxième organe de transfert dudit effort de réaction du corps (1) de l'unité de guidage transversal vers le corps (3, 4) de l'unité de guidage longitudinal.

6. Système de compensation selon l'une des revendications 1 à 5, **caractérisé en ce que** les premières pinces (7, 8) sont solidaires du support (15), ladite deuxième pince (11, 12) étant solidaire du corps (3, 4) de l'unité de guidage transversal.

7. Système de compensation selon l'une des revendications 1 à 6, **caractérisé en ce que** ladite première ou respectivement deuxième glissière se présente sous la forme d'une barre munie d'ergots (22) pour sa fixation au corps de l'unité de guidage transversal ou respectivement longitudinal.

8. Système de compensation selon la revendication 7, **caractérisé en ce que** ladite première ou respectivement deuxième glissière est fixée au corps de l'unité de guidage transversal ou respectivement longitudinal par des plots (10) d'écartement.

9. Système de compensation selon l'une des revendications 1 à 8, **caractérisé en ce que** l'effort de réaction est également transmis, par les organes de transfert, au corps (26, 28) d'une unité de guidage en profondeur réalisant un positionnement du support (15) de l'outil (6) mobile selon trois directions.

10. Dispositif de positionnement d'un outil (6) du type rotatif transmettant un couple moteur comprenant un système de compensation selon l'une des revendications 1 à 9.

## Patentansprüche

1. System zum Ausgleichen einer Reaktionskraft, welche von einem Werkzeug (6) erzeugt wird, welches fest mit seinem gemäß mindestens einer Längsrichtung und einer Querrichtung beweglichen Halter (15) verbunden ist, **dadurch gekennzeichnet, dass** es einerseits zwei erste Klemmen (7, 8) aufweist, welche beiderseits des Halters (15) des Werkzeugs (6) angeordnet sind, wobei jede erste Klemme (7, 8) eine erste Klaue aufweist, deren Klemmbacken (16, 17, 33, 34) beiderseits einer ersten Gleitschiene (9) angeordnet sind, welche an dem Körper (1) einer Querführungseinheit befestigt ist, und andererseits mindestens eine zweite Klemme (11, 12) aufweist, welche eine zweite Klaue aufweist, deren Klemmbacken (18, 19) beiderseits einer zweiten Gleitschiene (13) angeordnet sind, welche am Körper (3, 4) einer Längsführungseinheit befestigt ist, um Transferelemente (7, 8, 9, 11, 12, 13, 14) zu bilden, welche die Übertragung der genannten von dem Drehwerkzeug (6) erzeugten Reaktionskraft gewährleisten, wobei das Drehwerkzeug ein Motordrehmoment überträgt, wobei diese Reaktionskraft folglich auf den Körper (1) der Querführungseinheit und auf den Körper (3, 4) der Längsführungseinheit übertragen wird.

2. Ausgleichssystem nach Anspruch 1, **dadurch gekennzeichnet, dass** die Transferelemente zwei zweite Klemmen (11, 12) aufweisen, welche an zwei Enden (21, 31) des Körpers (3, 4) der mit zwei zweiten Gleitschienen (13, 14) zusammenwirkenden Querführungseinheit angeordnet sind.

3. Ausgleichssystem nach Anspruch 1 oder 2, **dadurch gekennzeichnet, dass** der Körper (1) der Querführungseinheit in Bezug auf den Körper (3, 4) der Längsführungseinheit beweglich ist, um eine Längspositionierung des Werkzeugs zu gewährleisten, wobei der Halter (15) in Bezug auf den Körper (1) der Querführungseinheit beweglich ist, um eine Querpositionierung des Werkzeugs (6) zu gewährleisten.

4. Ausgleichssystem nach einem der Ansprüche 1 bis 3, **dadurch gekennzeichnet, dass** die Quer- und Längsführungseinheit die Positionierung des Werkzeugs (6) gewährleisten und in Abhängigkeit des Gewichtes des Werkzeugs (6) dimensioniert sind.

5. Ausgleichssystem nach einem der Ansprüche 1 bis 4, **dadurch gekennzeichnet, dass** die Transferelemente mindestens ein erstes Element zum Transfer der genannten Reaktionskraft von dem Halter (15) in Richtung auf den Körper (1) der Querführungseinheit und mindestens ein zweites Element zum Transfer der genannten Reaktionskraft des Körpers (1) der Querführungseinheit in Richtung auf den Körper (3, 4) der Längsführungseinheit aufweisen.

6. Ausgleichssystem nach einem der Ansprüche 1 bis 5, **dadurch gekennzeichnet, dass** die ersten Klemmen (7, 8) fest mit dem Halter (15) verbunden sind, wobei die genannte zweite Klemme (11, 12) fest mit dem Körper (3, 4) der Querführungseinheit verbunden ist.

7. Ausgleichssystem nach einem der Ansprüche 1 bis 6, **dadurch gekennzeichnet, dass** sich die genannte erste oder jeweils zweite Gleitschiene in der Form einer mit Nasen (22) versehenen Stange für deren Befestigung an dem Körper der Quer- oder jeweils Längsführungseinheit darstellt.

8. Ausgleichssystem nach Anspruch 7, **dadurch gekennzeichnet, dass** die genannte erste öder jeweils zweite Gleitschiene an dem Körper der Quer- oder jeweils Längsführungseinheit durch Abstandshalter (10) befestigt ist.

9. Ausgleichssystem nach einem der Ansprüche 1 bis 8, **dadurch gekennzeichnet, dass** die Reaktionskraft ebenfalls durch die Transferelemente auf den Körper (26, 28) einer Tiefenführungseinheit übertragen wird, welche eine Positionierung des in drei Richtungen beweglichen Halters (15) des Werkzeugs (6) bewerkstelligt.

10. Vorrichtung zur Positionierung eines Drehwerkzeugs (6), welches ein Motordrehmoment überträgt, aufweisend ein Ausgleichssystem nach einem der Ansprüche 1 bis 9.

## Claims

1. System for compensating a reaction force produced by a tool (6) secured to its movable support (15) in at least one longitudinal direction and a transverse direction, **characterized in that** it comprises on the one hand two first clamps (7,8) arranged on either side of the support (15) of the tool (6), each first clamp (7,8) comprising jaws (16,17,33,34) whose are arranged on either side of a first slideway (9) fixed to the body (1) of a transverse guide unit and secondly at least one second clamp (11,12) comprising jaws (18,19) whose are arranged on either side of a second slide (13) fixed to the body (3,4) of a longitudinal guiding unit to form transfer members (7,8,9,11,12,13,14) ensuring the transmission of said reaction force produced by the tool (6) which type is a rotary transmission transmitting a driving torque, this reaction force being thus transmitted to the body (1) of the transverse guide unit and to the bodies (3,4) of the longitudinal guiding unit.

2. Compensation system according to claim 1, **characterized in that** the transfer members comprise two second clamps (11, 12) arranged at both ends (21, 31) of the body (3, 4) of the transverse guiding unit cooperating with two second slides (13, 14).

3. Compensation system according to claim 1 or 2, **characterized in that** the body (1) of the transverse guide unit is movable in relation to the body (3, 4) of the longitudinal guide unit to ensure a longitudinal positioning of the tool, the support (15) being movable in relation to the body (1) of the transverse guide unit to ensure transverse positioning of the tool (6).

4. Compensation system According to one of claims 1 to 3, **characterized in that** the transverse and longitudinal guidance units ensure the positioning of the tool (6) and are dimensioned according to the weight of the tool (6).

5. Compensation system According to one of claims 1 to 4, **characterised in that** the transfer organs comprise at least one first transferring mechanism of the reaction force of the support (15) to the body (1) of the Transverse guidance unit and at least one Second transferring mechanism of the reaction force of the body (1) of the transverse Guidance Unit to the body (3, 4) of the Longitudinal guidance Unit.

6. Compensation system According to one of the claims 1 to 5, **characterised in that** the first clamps (7, 8) are fixed with the support (15), the second clamp (11, 12) being attached to the body (3, 4) of the Transverse Guide unit.

7. Compensation system According to one of the claims 1 to 6, **characterised in that** the said first or respectively second slide is in the form of a bar with lugs (22) for its attachment to the body of the Transverse Guide unit or respectively longitudinal.

8. Compensation system According to claim 7, **characterised in that** the said first or respectively second slide is attached to the body of the Transverse Guide unit or respectively longitudinally by Spacing studs (10).

9. Compensation system According to one of claims 1 to 8, **characterised in that** the reaction effort is also transmitted, by the transferring members, to the body (26, 28) of an elevation guide unit carrying out a positioning of the support (15) of the tool (6) Mobile in three directions.

10. Device for positioning a rotary-type tool (6) transmitting an engine torque comprising a compensation system according to one of claims 1 to 9.
